Europäisches Patentamt

European Patent Office

Office européen des brevets

(19)

(11) Publication number: **0 089 796**
**A1**

(12)

# EUROPEAN PATENT APPLICATION

(21) Application number: **83301393.1**

(22) Date of filing: **14.03.83**

(51) Int. Cl.³: **C 08 G 18/14**
**C 08 J 9/14**

(30) Priority: **19.03.82 GB 8208144**
**26.03.82 GB 8208883**

(43) Date of publication of application:
**28.09.83 Bulletin 83/39**

(84) Designated Contracting States:
**AT BE CH DE FR GB IT LI NL SE**

(71) Applicant: **IMPERIAL CHEMICAL INDUSTRIES PLC**
**Imperial Chemical House Millbank**
**London SW1P 3JF(GB)**

(72) Inventor: **Thorpe, David**
**Sterrebeekse Steenweg-45**
**B-3078 Everberg/Kortenberg(BE)**

(72) Inventor: **Smith, Kenneth Michael**
**19 Queens Place**
**Summerseat Bury BL9 5PH(GB)**

(74) Representative: **Houghton, Malcolm John et al,**
**Imperial Chemical Industries PLC Legal Department:**
**Patents Thames House North Millbank**
**London SW1P 4QG(GB)**

(54) **Method of manufacturing polyurethane foams.**

(57) Foamed isocyanate-based plastics products are made by reacting an organic polyisocyanate with an isocyanate-reactive material, especially a polyol, the polyisocyanate and optionally the isocyanate-reactive material having carbon dioxide dissolved therein under pressure.

EP 0 089 796 A1

## METHOD OF MANUFACTURING POLYURETHANE FOAMS

This invention relates to a method of manufacturing foamed plastics products, particularly such products derived from polyisocyanates. It also relates to a novel polyisocyanate composition for use in manufacturing the products and to the products obtained therefrom.

It is well known to make foamed plastics products by reacting an organic polyisocyanate with an isocyanate-reactive material, commonly an organic polyol, in the presence of a foaming agent.

Foaming agents which are conventionally used are of two main types. These are (a) inert, low boiling liquids, for example chlorofluoromethanes, which dissolve in the polyisocyanate or polyol components and which are vaporised by the heat of the chemical reaction between the polyisocyanate and polyol; and (b) water, which chemically reacts with the polyisocyanate to form carbon dioxide gas.

The use of either type of agent effects the chemical structure, as well as the physical structure, of the product in which it is used. This is because, in the case of type (a), vaporisation of the low boiling liquid takes heat from the reaction of the polyisocyanate and polyol and influences the course of reaction and, in the case of type (b), water reacts with the polyisocyanate to form a polymeric product containing urea groups as well as forming carbon dioxide gas. The use of these types of foaming agents is restrictive in that it is not possible to vary their usage to modify physical properties of the product, in particular its density, without changing its chemical structure.

A third type of foaming agent, which enables the density of a product to be modified without changing its chemical structure, is known from US Patent No.4288564. This is air or nitrogen dissolved under pressure in the polyol or isocyanate component. The dissolved gas is released to perform its foaming action by reducing the pressure. This type of foaming agent has an additional advantage in moulding processes. This is that foaming can begin earlier leading to better flow of plastics-forming ingredients into mould cavities.

Unfortunately the use of dissolved air or nitrogen as a foaming agent has the drawback that only a small amount of foaming can be achieved at practicable pressures. For example, on releasing an air pressure of ten atmospheres from an isocyanate component the quantity of gas released is less than the original volume of isocyanate. When type (a) foaming agents are used in addition, even less gas is generated on pressure release.

The present invention is aimed at minimising this drawback while still enabling the density of a foamed plastics product to be modified without changing its chemical structure.

According to the present invention there is provided a method of manufacturing a foamed plastics product by reacting an organic polyisocyanate with an isocyanate-reactive material, the polyisocyanate and optionally the isocyanate-reactive material having carbon dioxide dissolved therein under pressure preferably up to 10, especially from 2 to 3, atmospheres of pressure. Additionally one or more conventional foaming agents may be used. The invention also includes, for use in the method of the invention, a novel composition comprising a polyisocyanate having carbon dioxide dissolved therein under pressure. Further the invention includes foamed plastics products obtained therefrom.

The polyisocyanate which is used in the invention may be any liquid polyisocyanate or polyisocyanate derivative which is conventionally used to make foamed or microcellular polyisocyanate-based products, provided that such polyisocyanate derivatives, which include isocyanate-ended prepolymers, have a NCO value of not less than 15. Such products include polyurethanes, polyurethane-ureas and polyisocyanurates.

The isocyanate-reactive material, which will contain at least one, usually two or more, active hydrogen atoms as determined by the Zerewitinoff method, may be any such liquid material, especially a polyol, conventionally used to make foamed or microcellular plastics articles.

The polyisocyanate or the isocyanate-reactive material or both may contain a conventional foaming agent except that only an inert, low boiling liquid, not water, would be used with the polyisocyanate. If a conventional inert, low boiling liquid foaming agent is used in addition to dissolved carbon dioxide it is preferred that only the polyisocyanate contains the dissolved carbon dioxide while isocyanate-reactive component contains the inert, low boiling liquid.

Suitable polyisocyanates and isocyanate-reactive materials are well documented in the relevant literature and well known to polyurethane technologists.

In carrying out the method of the invention, the polyisocyanate and optionally the isocyanate-reactive material, having carbon dioxide dissolved therein under pressure, optionally containing other ingredients conventionally used in making isocyanate-based foamed products, are fed as two or more separate

0089796

streams to a mixing device which intimately mixes them to provide a plastics-forming liquid mixture. This mixture may be injected into a closed mould or cast into an open mould or sprayed or layed down on to a stationary or moving surface by conventional techniques to form a foamed plastics product.

Carbon dioxide is dissolved in the polyisocyanate to form the composition of the invention by introducing it into the polyisocyanate as a gas under pressure while the polyisocyanate is held, for example, in a storage tank or feed vessel which can be pressurised. A similar procedure is used if carbon dioxide is to be dissolved also in the isocyanate-reactive material.

The quantity of carbon dioxide dissolved in the polyisocyanate and optionally the isocyanate-reactive material will depend on the amount of foaming required to produce the desired product. It has been found, for example, that by applying a pressure of two atmospheres of carbon dioxide to a polyisocyanate a volume of gas equivalent to at least the volume of isocyanate is evolved when the pressure is released. Applying a similar pressure of carbon dioxide to a flexible foam polyol produces a volume of gas equivalent to approximately the volume of polyol.

The advantages of the present invention are that with very rapidly reacting plastics-forming mixtures, such as are used in the well known "RIM Process" (Reaction Injection Moulding Process) for moulding microcellular elastomers, lower densities and better flow characteristics can be achieved than with conventional foaming agents (including dissolved air) and moulding pressure is lower leading to fewer surface defects. The RIM process involves a technique of filling a mould by injecting into the mould within a very short time by means of high output, high

Du.32228

pressure dosing apparatus highly reactive liquid starting components after they have been mixed in so-called "positively controlled mixing heads". References to the RIM process and a description of starting components for use in it are described in, for example, UK Patents Specification No.1534258 which description is incorporated, by reference, into the present specification. The present invention is used in place of or in addition to the conventional blowing techniques used in the RIM process. It is of particular advantage when used in conjunction with the very fast reacting components of the RIM process described in UK Patent Specification No.1534258 incorporating as a chain lengthening agent an active aromatic diamine or higher polyamine which may be substituted by at least one alkyl group in at least one of the ortho positions to at least one of the amino groups. With conventional flexible or rigid foams better flow characteristics and lower densities can be achieved. By dissolving carbon dioxide at high pressures in the polyisocyanate and optionally the isocyanate-reactive material it is possible to make low density foam products from very reactive systems.

The invention is illustrated by the following Examples 1 and 2. The Control Example, which forms no part of the invention, is included for comparative purposes only.

Control Example

A very fast reacting (with isocyanate) polyol blend
suitable for use in a RIM process, was prepared by mixing together
the following ingredients:

|  | Parts by weight |
|---|---|
| A polyol having an OH value of 30 mg.KOH/g, which is an ethylene oxide tipped condensation product of propylene oxide and glycerol, containing approximately 20% by weight of ethylene oxide units | 106 |
| An 80:20 mixture of 2,4-diamino-3,5-diethyltoluene and 2,6-diamino-3,5-diethyltoluene | 25 |
| Diazabicyclooctane (DABCO) | 0.7 |
| Dibutyl tin dilaurate | 0.3 |
| Silicone DC 193 (obtainable from Dow Corning) | 1.0 |

50kg of this blend was charged to the polyol tank of a
Krauss Maffei RIM STAR 80 machine (fitted with piston metering on
the polyol side).   A uretonimine-modified pure diphenylmethane
diisocyanate was charged to the isocyanate tank of the same
machine.   An air pressure of 10 atmospheres was applied to the
polyol tank and 3 atmospheres to the isocyanate tank.

. A test plaque of dimensions 100 x 60 x 0.4 cm$^3$ was prepared by injecting into a mould a mixture of the polyol blend and isocyanate at a polyol:isocyanate mixing ratio of 100:40, at a total output rate of 1650 g/sec.

It was found that the minimum weight of polyol/isocyanate mixture required to fill the mould was 2650g corresponding to a density of 1100 kg/m$^3$.

Test plaques prepared in the same manner but with the addition of water and trichlorofluoromethane blowing agents to the polyol/isocyanate mixture were of similar density. The conventional blowing agents were ineffective in reducing the density.

Example 1

The procedure of the Control Example was repeated except that a pressure of 2.5 atmospheres of carbon dioxide was applied to the isocyanate tank and a pressure of 5 atmospheres of carbon dioxide was applied to the polyol tank. Using the same machine settings as in the Control Example, it was found possible to fill the same test plaque mould with 1440g of the polyol/isocyanate mixture, corresponding to a density of 600 kg/m$^3$.

Example 2

Structural polyurethane foam mouldings were produced on a conventional moulding line using high pressure mixing of a modified crude diphenylmethane diisocyanate and a typical structural foam polyether-based fire retardant polyol. The only departure from normal operating conditions was that the isocyanate was stirred under 4½ atmospheres pressure of carbon dioxide for 1½ to 2 hours in its hold tank before use.

Compared with mouldings produced under normal operating conditions, the mouldings of this Example were of lower density, better surface appearance and more consistent quality due to
better mould flow of the isocyanate/polyol mixture.

## CLAIMS

1. A method of manufacturing a foamed plastics product by reacting an organic polyisocyanate with an isocyanate-reactive material, the polyisocyanate and optionally the isocyanate-reactive material having carbon dioxide dissovoled therein under pressure.

2. A method according to claim 1 in which the carbon dioxide is dissolved in the polyisocyanate under up to 10 atmospheres of pressure.

3. A method according to claim 1 in which the carbon dioxide is dissolved in the polyisocyanate under from 2-3 atmospheres of pressure.

4. A method according to any one of the preceding claims which is carried out by the reaction injection moulding process.

5. A composition comprising a polyisocyanate having carbon dioxide dissolved therein under pressure.

| | DOCUMENTS CONSIDERED TO BE RELEVANT | | EP 83301393.1 | |
|---|---|---|---|---|
| Category | Citation of document with indication, where appropriate, of relevant passages | Relevant to claim | CLASSIFICATION OF THE APPLICATION (Int. Cl. ³) | |
| D,A | US - A - 4 288 564 (CONOVER et al.) <br> * Abstract; column 9, lines 42-51 * <br> -- | 1-4 | C 08 G 18/14 <br> C 08 J 9/14 | |
| A | DE - A1 - 2 917 495 (SCHOLTEN, BENT HENRIK NIELS VON) <br> * Claims * <br> -- | 1,2 | | |
| P,A | EP - A1 - 0 069 163 (UNION CARBIDE CORPORATION) <br> * Claim 1; page 33, lines 9-35 * <br> -- | 1-3 | | |
| A | VIEWEG-HÖCHTLEN "Kunststoff-Handbuch, Band VII: "Polyurethane", 1966 <br> CARL HANSER VERLAG, München pages 151-153 <br> * Page 152, lines 16-18 * <br> ---- | 1 | TECHNICAL FIELDS SEARCHED (Int. Cl. ³) <br><br> C 08 G 18/00 <br> C 08 J | |

The present search report has been drawn up for all claims

| Place of search | Date of completion of the search | Examiner |
|---|---|---|
| VIENNA | 15-06-1983 | WEIGERSTORFER |